**Europäisches Patentamt**

**European Patent Office**

**Office européen des brevets**

(19)

(11) Numéro de publication : **0 107 571**
**B1**

(12)

# FASCICULE DE BREVET EUROPÉEN

(45) Date de publication du fascicule du brevet :
16.06.87

(51) Int. Cl.⁴ : **C 04 B 35/10**, C 04 B 35/58,
B 32 B 18/00

(21) Numéro de dépôt : **83401980.4**

(22) Date de dépôt : **11.10.83**

(54) **Matériau céramique à base d'alumine et son procédé de fabrication.**

(30) Priorité : 11.10.82 FR 8216957

(43) Date de publication de la demande :
02.05.84 Bulletin 84/18

(45) Mention de la délivrance du brevet :
16.06.87 Bulletin 87/25

(84) Etats contractants désignés :
BE CH DE FR GB IT LI NL SE

(56) Documents cités :
EP-A- 0 026 750
US-A- 3 274 009
US-A- 4 203 733
US-A- 4 214 906
US-A- 4 241 000
CHEMICAL ABSTRACTS, vol. 94, no. 22, juin 1981,
page 297, no. 179541t, Columbus, Ohio, US
CHEMICAL ABSTRACTS, vol. 93, no. 10, septembre
1980, page 319, no. 100428j, Columbus, Ohio, US

(73) Titulaire : **ASSOCIATION POUR LA RECHERCHE ET
LE DEVELOPPEMENT DES METHODES ET PROCES-
SUS INDUSTRIELS (ARMINES)**
**60, Boulevard Saint-Michel**
**F-75272 Paris Cédex 06 (FR)**

(72) Inventeur : **Turpin-Launay, Dominique**
**16 Impasse de la Vivaraize**
**F-42100- Saint-Etienne (FR)**
Inventeur : **Goeuriot, Patrice**
**Lot. "La Duo" Montée du Pré de Fonz**
**F-43330- Pont-Salomon (FR)**
Inventeur : **Thévenot, François**
**3 rue F. Voytier**
**F-42100- Saint-Etienne (FR)**
Inventeur : **Orange, Gilles**
**41 avenue Albert Einstein**
**F-69100- Villeurbanne (FR)**
Inventeur : **Fantozzi, Gilbert**
**60 rue Edison**
**F-69330- Meyzieu (FR)**

(74) Mandataire : **Bruder, Michel**
**10 rue de la Pépinière**
**F-75008 Paris (FR)**

EP 0 107 571 B1

## Description

La présente invention concerne un matériau céramique à base d'alumine et son procédé de fabrication.

L'alumine qui est un matériau peu coûteux par rapport aux céramiques nouvelles du type $Si_3N_4$ et Sialons, est couramment utilisée en particulier à cause de son inertie chimique remarquable. Toutefois ses propriétés mécaniques ne sont pas exceptionnelles et en particulier sa résistance aux chocs thermiques est médiocre. A haute température (au-dessus de 1 000 °C) sa résistance à la flexion et sa ténacité chutent de façon sensible. Dans ces conditions, l'alumine a un domaine d'utilisation très limité et il s'est révélé par conséquent souhaitable de renforcer ses propriétés mécaniques.

On a déjà envisagé de réaliser des céramiques à base d'alumine par compression à chaud de mélanges d'alumine et de nitrure d'aluminium ($AlN-Al_2O_3$). Les résultats de ces essais ont été publiés dans l'article ayant pour titre « propriétés physiques et mécaniques de céramiques $AlN-Al_2O_3$ obtenues par compression à chaud », publié par R. Kieffer, W. Wruss et B. Willer dans la « Revue internationale hautes températures et réfractaires » 1976, t. 13, pages 97-107. Cet article indique que les essais ont porté sur des mélanges d'alumine et de nitrure d'aluminium, ce dernier ayant une granulométrie moyenne égale à 3,5 microns. Après compression à chaud les divers échantillons obtenus ont fait apparaître, après analyse aux rayons X, diverses phases fonction des pourcentages relatifs d'$Al_2O_3$ et d'AlN, comme il est indiqué dans le tableau IV de cet article. Les diverses céramiques obtenues à la suite de ces essais comportent deux ou trois phases, l'une des phases identifiée étant toujours constituée par le nitrure d'aluminium AlN.

Par ailleurs d'autres auteurs ont fritté des mélanges d'alumine et de nitrure d'aluminium. Yoneya Katsutoshi et ses collaborateurs (Japan Kokai Tokkyo Koho 8 032,743, 7 mars 1980) ont mélangé $\alpha Al_2O_3$ avec 0,25 à 5 % d'AlN et fritté sous hydrogène à 1 700 °C pendant 2 h. Ils obtiennent une pièce en alumine dense à 99,9 %. Le nitrure d'aluminium s'est donc évaporé dans ces conditions opératoires. Sandwik a breveté des matériaux (Brevet Européen 80.850 118.3 du 8.8.80) à base d'alumine et de carbures et de carbonitrures des groupes IVB, VB et VIB. Pour certains mélanges (avec TiC notamment) du nitrure d'aluminium ou de l'oxynitrure d'aluminium $\gamma$ ont été ajoutés. La présence de phase spinelle dans ces composites alumine-TiC (par exemple) en a amélioré la résistance à l'usure. Les matériaux obtenus sont au moins triphasés (alumine + carbure + oxynitrure d'aluminium), de l'oxyde de magnésium pouvant aussi être ajouté pour favoriser le frittage.

La présente invention vise à procurer un matériau céramique à base d'alumine dont les propriétés mécaniques sont remarquablement améliorées à haute température.

A cet effet, ce matériau céramique à base d'alumine est caractérisé en ce qu'il comporte une matrice d'alumine dans laquelle est dispersé de l'oxynitrure d'aluminium $\gamma$, sans présence appréciable d'une autre phase néfaste aux propriétés mécaniques à haute température.

L'invention a également pour objet un procédé de fabrication d'un matériau céramique à base d'alumine, à partir d'un mélange d'alumine et de nitrure d'aluminium, caractérisé en ce que l'on transforme par frittage le mélange d'alumine et de nitrure d'aluminium de manière à obtenir un matériau ne comportant pratiquement que deux phases à savoir une matrice d'alumine $\alpha$ et une phase oxynitrure d'aluminium $\gamma$ dispersée dans cette matrice.

Pour obtenir le matériau céramique suivant l'invention on mélange de l'alumine $\alpha$ et du nitrure d'aluminium, la quantité de nitrure étant au plus de 27 % molaire. On homogénéise le mélange dans une jarre en alumine, sous alcool éthylique, en animant cette jarre d'un mouvement planétaire. On sèche ensuite la barbotine ainsi obtenue, sous vide primaire, pour éviter toute oxydation superficielle des poudres. On peut toutefois réaliser le mélangeage suivant tout autre procédé connu convenant à l'obtention d'un mélange homogène.

Des essais ont été effectués en vue d'obtenir des céramiques composites à matrice d'alumine contenant divers pourcentages en volume de la phase oxynitrure dispersée. Ces céramiques dont les caractéristiques physiques sont résumées dans le tableau ci-après, sont indiquées par $A_{10}$, $A_{20}$, $A_{30}$, $A_{40}$, à titre d'exemples, et correspondent respectivement à 10, 20, 30 et 40 % en volume d'oxynitrure. Dans le cas de la céramique $A_{30}$ (30 % d'oxynitrure), on part d'un mélange ayant la composition initiale suivante :

90 % molaire d'alumine de granulométrie inférieure à 1 micron et de surface spécifique 9 $m^2/g$,

10 % molaire de nitrure d'aluminium ayant une granulométrie inférieure à 1 micron et de surface spécifique 4,2 $m^2/g$.

Pour obtenir la réaction du nitrure d'aluminium sur l'alumine $\alpha$ de la matrice, par frittage-réaction, on presse à chaud le mélange ainsi obtenu dans une matrice en graphite chemisée de feuille de carbone. On porte les échantillons à une température supérieure à 1 700 °C, sous atmosphère stabilisatrice d'azote. La pression exercée sur le piston de la presse est comprise, de préférence, entre 5 et 40 MPa mais elle peut être supérieure à cette dernière valeur. La durée du palier est déterminée par le temps nécessaire pour assurer la transformation totale du nitrure d'aluminium en oxynitrure $Al_xO_yN_z$.

Le frittage du mélange d'alumine et de nitrure d'aluminium peut être réalisé en mettant en œuvre l'une quelconque des techniques connues actuellement à savoir compression à chaud ou compression isostatique à chaud, laquelle présente les avantages d'une absence de pollution et d'une résorption de la porosité résiduelle : obtention de matériaux transparents. On peut également utiliser le frittage naturel, après pressage isostatique à froid, comme il sera exposé plus loin.

Dans le cas de l'exemple précité, on place environ 15 grammes du mélange obtenu précédemment dans la matrice ayant un diamètre de 20 mm. La montée en température est de l'ordre de 30 °C/mn, sous une pression de 10 MPa. La température de frittage choisie est de 1 800 °C et l'échantillon y est maintenu pendant 30 mn sous une pression de 40 MPa.

Par ailleurs il est possible de réaliser des pièces en alumine présentant une ou plusieurs couches superficielles contenant seules de l'oxynitrure d'aluminium en opérant de la manière suivante : dans la matrice de compression on place successivement un mélange comprenant 10 % molaire de nitrure d'aluminium et 90 % molaire d'alumine, puis de l'alumine pure, en position de noyau central, et enfin de nouveau un mélange de 10 % molaire de nitrure d'aluminium et 90 % molaire d'alumine pure. Après la compression à chaud on obtient par conséquent une pièce présentant un noyau central constitué d'alumine pure et qui est pris entre deux couches superficielles formées d'une matrice d'alumine dans laquelle est dispersé de l'oxynitrure d'aluminium résultant de la transformation du nitrure d'aluminium. Les pourcentages relatifs des trois couches placées en superposition dans la matrice de compression dépendent naturellement des épaisseurs que l'on désire obtenir, après frittage, pour le noyau central et les couches superficielles. Le traitement de frittage est semblable à celui qui a été indiqué précédemment. Dans un exemple d'application particulier, on a utilisé une température de 1 830 °C et une pression de 40 MPa exercée pendant vingt minutes.

Pour obtenir une pièce composite à noyau d'alumine pure, on peut utiliser éventuellement un noyau d'alumine déjà fritté placé dans la matrice de compression entre les deux couches de mélange d'alumine et de nitrure d'aluminium.

On étudiera maintenant les propriétés du matériau céramique suivant l'invention ainsi obtenu.

Dans le domaine de température choisi (supérieure à 1 700 °C) l'alumine et le nitrure d'aluminium réagissent pour donner, conformément au diagramme d'équilibre de ces deux phases, un oxynitrure de type spinelle ($\gamma$). La quantité d'oxynitrure formée dépend des concentrations initiales choisies. Par exemple, pour une composition initiale de 90 % molaire d'$Al_2O_3$ $\alpha$ et 10 % molaire d'AlN, on obtient une céramique ($A_{30}$) constituée essentiellement d'alumine $\alpha$ dans laquelle est dispersée la phase d'oxynitrure d'aluminium $\gamma$ à raison d'environ 30 % en volume.

On a procédé à une mesure de différentes propriétés physiques (indiquées dans le tableau ci-dessous) de céramiques $A_{10}$, $A_{20}$, $A_{30}$, $A_{40}$, obtenues suivant l'invention, et des mêmes propriétés de l'alumine $\alpha$ obtenue dans les mêmes conditions de préparation (colonne I) ou par compression à chaud à 1 550 °C pendant 1 heure (colonne II).

| Composite | Alumine $\alpha$ | | $A_{10}$ | $A_{20}$ | $A_{30}$ | $A_{40}$ |
|---|---|---|---|---|---|---|
| densité g.cm$^{-3}$ | 3,97 ± 0,01 | | 3,94 ± 0,01 | 3,91 ± 0,01 | 3,89 ± 0,01 | 3,86 ± 0,01 |
| Taille des grains (μm) obtenue par compression à chaud | I 25-40 | II 1-5 | 10-15 | 5-15 | 5-15 | 5-15 |
| $\sigma_f$ MPa 25 °C | 190 ± 30 | 610 ± 30 | | | 380 ± 30 | |
| $\sigma_f$ MPa 1 000 °C | 160 ± 30 | 600 ± 30 | | | 390 ± 30 | |
| $\sigma_f$ MPa 1 200 °C | 100 ± 20 | . | | | 375 ± 30 | |
| $\sigma_f$ MPa 1 400 °C | 80 ± 20 | 200 ± 30 | | | 340 ± 30 | |
| $K_{Ic}$ MPa $\sqrt{m}$ 25 °C | 4,4 ± 0,2 | 5,2 ± 0,2 | 4,3 ± 0,2 | 3,8 ± 0,2 | 3,7 ± 0,2 | 3,6 ± 0,2 |
| $K_{Ic}$ MPa $\sqrt{m}$ 1 000 °C | 3,8 ± 0,2 | | 4,1 ± 0,2 | 3,5 ± 0,2 | 3,8 ± 0,2 | 3,5 ± 0,2 |
| $K_{Ic}$ MPa $\sqrt{m}$ 1 200 °C | 3 ± 0,2 | | 4,0 ± 0,2 | 3,3 ± 0,2 | 3,9 ± 0,2 | 3,2 ± 0,2 |
| $K_{Ic}$ MPa $\sqrt{m}$ 1 400 °C | 1,5 ± 0,2 | | 3,8 ± 0,2 | 3,6 ± 0,2 | 4,4 ± 0,2 | 4,8 ± 0,2 |
| Dureté GPa $H_{V\ ION}$ | 18,45 ± 1,10 | . | 21,3 ± 1,0 | 21,35 ± 0,90 | 21,85 ± 0,80 | 20,8 ± 1,1 |

La masse volumique des échantillons a été déterminée par poussée dans l'eau. Dans le cas de la céramique $A_{30}$ on a obtenu une densité d # 3,89 g/cm$^3$ et comme la densité théorique du mélange final est de 3,95, on voit que la densification obtenue est de 98,4 %.

La dureté des échantillons a été mesurée au moyen d'un microdurimètre Leitz type DURIMET, avec une pointe Vickers, sous 10N. D'après le tableau ci-dessus on voit que la dureté des céramiques suivant l'invention est nettement supérieure (de 20 à 30 %) à celle de l'alumine obtenue dans les mêmes conditions (colonne I). La résistance à l'usure est très grande.

3

**0 107 571**

On a procédé également à des essais de résistance à la flexion. Ces essais ont été effectués sur une machine Instron équipée d'un four en chromite de lanthane permettant d'atteindre une température de 1 600 °C. Afin d'éviter toute oxydation, les essais ont eu lieu en atmosphère contrôlée d'azote. Le dispositif de déformation (flexion en trois points) est constitué de trois rouleaux en alumine dense. L'entraxe est de 15 mm. La déformation est enregistrée par l'intermédiaire d'un capteur de déformation différentiel. La vitesse de la traverse est de 0,1 mm/mn. Les éprouvettes rectifiées et polies ont les dimensions suivantes 17 × 4 × 3 mm$^3$.

L'étude des enregistrements déplacement-force montrent que la rupture a lieu dans le domaine élastique même à 1 400 °C. Aucune plasticité macroscopique n'est observée ce qui montre qu'il ne s'est formée aucune phase vitreuse et ce quelle que soit la composition de la céramique. Le matériau céramique présente donc un bon comportement au fluage à haute température.

Les résultats des essais de résistance à la flexion montrent qu'au-dessus de 1 000 °C le matériau composite suivant l'invention a des propriétés nettement supérieures à celles de l'alumine pure. En effet la résistance à la flexion $\sigma_f$ de la céramique $A_{30}$ est de 375 ± 30 et 340 ± 30 MPa respectivement à des températures de 1 200 et 1 400 °C alors qu'à ces mêmes températures la résistance à la flexion maximale de l'alumine $\alpha$, quelles que soient ses conditions de préparation (colonnes I et II), est nettement inférieure (80 MPa) dans la colonne I et 200 MPa dans la colonne II à 1 400 °C).

On a procédé également à des essais de ténacité sur les éprouvettes de matériau composite précité. Ces éprouvettes sont entaillées avec une meule diamantée (largeur de l'entaille 0,3 mm, hauteur relative 0,4) afin de mesurer la ténacité $K_{IC}$. Cette ténacité, pour la céramique $A_{30}$ varie de 3,7 à 25 °C à 4,4 MPa$\sqrt{m}$ à 1 400 °C.

On a procédé également à des essais de résistance à l'oxydation du matériau céramique suivant l'invention. Le matériau se présentant sous la forme d'un disque de 20 mm de diamètre et de 3 mm d'épaisseur est maintenau 18 heures entre 1 000 et 1 050 °C sous air, sans variation de masse. On remarque un léger voile blanc non adhérent ne correspondant pas à une masse décelable par pesée au 1/10 de mg.

Un nouveau séjour de l'échantillon précédent de 23 heures, entre 1 100 et 1 200 °C, à l'air, crée une légère oxydation correspondant à un degré d'avancement inférieur à 0,04.

La résistance à la flexion à 1 100 °C sous air d'un échantillon maintenu préalablement pendant 3 heures à cette température, dans les mêmes conditions, est similaire à celle mesurée sous atmosphère neutre. Aucun effet bénéfique ou négatif n'est donc observé.

Il y a lieu de remarquer qu'au-dessous de 1 100 °C l'oxydation de l'oxynitrure d'aluminium conduit à la formation d'alumine $\gamma'$ (réf. P. Gœuriot, thèse spécialité Limoges 1975) de volume identique à la phase oxydée. Ceci implique que même après oxydation les grains d'alumine $\gamma'$ exerceront une contrainte de compression sur la matrice d'alumine qui existait également dans le matériau revendiqué.

On a mesuré également, dans le cas de la céramique $A_{30}$, les propriétés électriques de celle-ci. La permittivité électrique $\varepsilon = 10$ reste constante en fréquence. Par ailleurs la tangente de perte tg $\delta = 3 \cdot 10^{-4}$ reste constante en fréquence jusqu'à 1 MHz, elle est égale à $20 \cdot 10^{-4}$ à 100 MHz et à $10^{-4}$ à 10 GHz. La résistivité électrique $\rho$ est égale à $1,8 \cdot 10^{13}\,\Omega \cdot cm$ (sous 1 volt) et à $0,9 \cdot 10^{13}\,\Omega \cdot cm$ (sous 1 000 volts). A la suite de ces essais, on voit que les céramiques suivant l'invention constituent des bons diélectriques.

Comme il a déjà été indiqué précédemment, il est également possible de fabriquer des matériaux céramiques suivant l'invention par frittage naturel.

Dans ce cas, les mélanges sont homogénéisés comme précédemment, ils sont pressés isostatiquement à froid (à une pression supérieure à 10 MPa) et ils sont ensuite soumis à des traitements thermiques sous azote, à une température supérieure à 1 700 °C. On utilise les mêmes teneurs (10, 20, 30, 40 %) que dans le cas de la compression à chaud. Les échantillons sont noyés ou non dans une gangue stabilisatrice d'oxynitrure d'aluminium $\gamma$ pulvérulent.

A titre d'exemple, dans le cas de traitements thermiques à 1 780 °C et à 1 850 °C la transformation du nitrure d'aluminium est complète après une heure de traitement pour toutes les compositions précitées, sauf celle conduisant à 10 % volumique d'oxynitrure $\gamma$ qui réagit complètement après une demi-heure seulement. Si on effectue le traitement thermique à 1 900 °C, la transformation est totale après trente minutes mais on peut obtenir des matériaux triphasés contenant de l'alumine, des oxynitrures d'aluminium $\gamma$ et $\delta$.

En ce qui concerne la densification ou la taille des grains on peut atteindre les mêmes densités que dans le cas d'une compression à chaud pour des échantillons frittés à 1 800 °C pendant une heure sous azote. Les tailles de grains obtenues sont similaires. Le frittage-réaction entre l'alumine et le nitrure d'aluminium, quelles que soient les techniques de traitement précitées (lignes 9-17 page 3), permet de limiter le grossissement des grains par rapport à l'alumine pure traitée dans les mêmes conditions.

Les duretés Vickers obtenues pour une charge de 10N sont de 21,0 ± 0,8 GPa pour la céramique $A_{10}$, 22,95 ± 1,35 pour la céramique $A_{20}$ et 21,35 ± 0,80 pour la céramique $A_{30}$. On voit que ces duretés sont du même ordre que celles obtenues par compression à chaud.

En ce qui concerne la résistance à la flexion on a obtenu une valeur de 385 MPa pour la céramique $A_{20}$. On voit que cette valeur est du même ordre de grandeur que celle obtenue par compression à chaud.

Suivant une autre variante de réalisation la céramique suivant l'invention peut être obtenue à partir

4

d'un mélange de poudres d'alumine et d'oxynitrure d'aluminium synthétisé auparavant, ce qui permet un abaissement de la température de frittage (température supérieure ou égale à 1 500 °C) suivant l'une quelconque des techniques : frittage naturel, compression à chaud, compression isostatique à chaud. Par exemple un mélange constitué de 90 % en volume d'alumine α et de 10 % en volume d'oxynitrure d'aluminium γ présynthétisé par frittage-réaction AlN-Al$_2$O$_3$, fritté à une température de 1 600 °C pendant une heure sous azote, conduit à un matériau composite alumine-oxynitrure d'aluminium γ densifié à 90,8 %. Pour une température de frittage de 1 650 °C pendant une heure la densification est de 92,2 % tandis que pour une température de frittage de 1 780 °C, pendant une heure, le taux de densification atteint est de 94,6 %. Ces résultats peuvent être optimisés par contrôle granulométrique des poudres d'oxynitrure utilisées.

On voit d'après ce qui précède que le matériau céramique suivant l'invention présente des propriétés mécaniques qui, à température élevée, supérieure à 1 000 °C, restent au niveau mesuré à la température ambiante, et ceci contrairement à de nombreux matériaux de familles voisines. Par ailleurs sa résistance à l'oxydation est également remarquable.

Le matériau suivant l'invention peut donc être avantageusement utilisé à haute température pour constituer des outils de coupe, filières, gaines, creusets, revêtements, moteurs thermiques, ainsi que prothèses osseuses, blindages balistiques, pièces d'usure etc.

## Revendications

1. Matériau céramique à base d'alumine comportant une matrice d'alumine et de l'oxynitrure d'aluminium γ caractérisé en ce que l'oxynitrure d'aluminium est présent sous la forme d'une dispersion homogène sans présence d'une autre phase néfaste aux propriétés mécaniques à haute température.

2. Matériau céramique à base d'alumine suivant la revendication 1, caractérisé en ce qu'il comporte un noyau constitué d'alumine pure et au moins une couche superficielle constituée d'un mélange d'oxynitrure d'aluminium γ dispersé en proportion quelconque dans une matrice d'alumine.

3. Procédé de fabrication d'un matériau céramique à base d'alumine, à partir d'un mélange intime d'alumine et de nitrure d'aluminium, caractérisé en ce que l'on transforme par frittage-réaction, avec ou sans pression, isostatiquement ou non, à une température ajustable avec la réactivité des poudres et d'au moins 1 700 °C afin d'obtenir une dispersion unique et homogène d'oxynitrure d'aluminium γ, à l'exclusion de toute autre phase, dans une matrice d'alumine.

4. Procédé suivant la revendication 3, caractérisé en ce que l'on place dans la matrice de compression successivement un mélange d'alumine et de nitrure d'aluminium, puis une couche d'alumine pure, en position de noyau central, et enfin une couche d'un mélange de nitrure d'aluminium et d'alumine.

5. Procédé de fabrication d'un matériau céramique à base d'alumine comportant une matrice d'alumine et de l'oxynitrure d'aluminium γ sans présence d'une autre phase néfaste aux propriétés mécaniques à haute température, à partir d'un mélange homogène d'alumine et d'oxynitrure d'aluminium γ présynthétisé densifié à une température supérieure à 1 500 °C.

6. Procédé suivant la revendication 5 caractérisé en ce que l'on effectue un frittage naturel d'un mélange d'alumine et d'oxynitrure d'aluminium γ présynthétisé, par pressage uniaxial ou isostatique à froid, à une pression supérieure à 10 MPa, et on soumet ensuite le matériau à une température d'au moins 1 500 °C pendant au moins 5 minutes, sous atmosphère d'azote.

7. Procédé suivant la revendication 5 caractérisé en ce que l'on effectue une compression, isostatique ou non, à chaud d'un mélange d'alumine et d'oxynitrure d'aluminium γ présynthétisé à une température supérieure à 1 500 °C sous au moins 10 MPa et en atmosphère d'azote.

## Claims

1. Ceramic material based on alumina comprising a matrix of alumina and of γ aluminium oxynitride, characterized in that the aluminium oxynitride is present in the form of a homogeneous dispersion without the presence of another phase detrimental to the mechanical properties at high temperature.

2. Ceramic material based on alumina comprising a matrix of alumina and of γ aluminium oxynitride, characterized in that it comprises a core constituted by pure alumina and at least one superficial layer constituted by a mixture of γ aluminium oxynitride dispersed in any proportion in a matrix of alumina.

3. Process for manufacturing a ceramic material based on alumina, from an intimate mixture of alumina and of aluminium nitride, characterized in that there is converted by sintering-reaction, with or without pressure, isostatically or not, at a temperature adjustable with the reactivity of the powders and of at least 1 700 °C in order to obtain a single homogeneous dispersion of γ aluminium oxynitride, to the exclusion of any other phase, in a matrix of alumina.

4. A process according to claim 3, wherein there are successively placed in the compression matrix a mixture of alumina and of aluminium nitride, then a layer of pure alumina, in position of central core, and finally a layer of a mixture of aluminium nitride and of alumina.

5. Process for manufacturing a ceramic material based on alumina, comprising a matrix of alumina and of $\gamma$ aluminium oxynitride without the presence of another phase detrimental to the mechanical properties at high temperature, from a pre-synthesized homogeneous mixture of alumina and of $\gamma$ aluminium oxynitride densified at a temperature higher than 1 500 °C.

6. A process according to claim 5, wherein a natural sintering is effected of a pre-synthesized mixture of alumina and of $\gamma$ aluminium oxynitride, by uniaxial or isostatic cold-pressing, at a pressure greater than 10 MPa, and the material is thereafter subjected to a temperature of at least 1 500 °C for at least 5 minutes, in an atmosphere of nitrogen.

7. A process according to claim 5, wherein a hot compression, isostatic or not, is effected of a pre-synthetized mixture of alumina and of $\gamma$ aluminium oxynitride at a temperature higher than 1 500 °C unter at least 10 MPa and in an atmosphere of nitrogen.

**Patentansprüche**

1. Keramischer Werkstoff auf Aluminiumbasis mit einer Matrix aus Aluminium und $\gamma$-Aluminium-Oxynitrid, dadurch gekennzeichnet, daß das Aluminium-Oxynitrid in Form einer homogenen Dispersion ohne Gegenwart einer anderen, für die mechanischen Eigenschaften bei hoher Temperatur schädlichen Phase vorhanden ist.

2. Keramischer Werkstoff auf Aluminiumbasis nach Anspruch 1, dadurch gekennzeichnet, daß sie einen aus reinem Aluminium gebildeten Kern und wenigstens eine Oberflächenschicht umfassen, die aus einer Mischung von $\gamma$-Aluminium-Oxynitrid besteht, das in beliebigem Verhältnis in einer Matrix aus Aluminium verteilt ist.

3. Verfahren zur Herstellung eines keramischen Werkstoffs auf Aluminiumbasis ausgehend von einer innigen Mischung von Aluminium und Aluminiumnitrid, dadurch gekennzeichnet, daß man $\gamma$-Aluminium-Oxynitrid durch eine Sinter-Reaktion mit oder ohne Druck, isostatisch oder nicht isostatisch, bei einer entsprechend der Reaktivität der Pulver einstellbaren, wenigstens 1 700 °C betragenden Temperatur zur Erzielung einer einzigen und homogenen Dispersion unter Ausschluß jeder anderen Phase in eine Aluminiummatrix überführt.

4. Verfahren nach Anspruch 3, dadurch gekennzeichnet, daß man in die Preßmatrix aufeinanderfolgend eine Mischung aus Aluminium und Aluminiumnitrid, dann in die Position des zentralen Kerns eine Schicht aus reinem Aluminium und schließlich eine Schicht einer Mischung aus Aluminiumnitrid und Aluminium einbringt.

5. Verfahren zur Herstellung eines keramischen Werkstoffs auf Aluminiumbasis, der eine Matrix aus Aluminium und $\gamma$-Aluminium-Oxynitrid ohne Gegenwart einer anderen, für die mechanischen Eigenschaften bei hoher Temperatur schädlichen Phase umfaßt, ausgehend von einer homogenen Mischung von Aluminium und vorsynthetisiertem $\gamma$-Aluminium-Oxynitrid, die bei einer Temperatur oberhalb 1 500 °C verdichtet wurde.

6. Verfahren nach Anspruch 5, dadurch gekennzeichnet, daß man eine natürliche Sinterung einer Mischung aus Aluminium und vorsynthetisiertem $\gamma$-Aluminium-Oxynitrid durch einachsigen und bei Kälte isostatischen Druck, bei einem Druck oberhalb von 10 MPa durchführt und anschließend das Material einer Temperatur von wenigstens 1 500 °C für wenigstens 5 Minuten und in einer Stickstoffatmosphäre aussetzt.

7. Verfahren nach Anspruch 5, dadurch gekennzeichnet, daß man eine isostatische oder nicht isostatische Pressung bei Wärmeeinwirkung einer Mischung aus Aluminium und vorsynthetisiertem $\gamma$-Aluminium-Oxynitrid bei einer Temperatur oberhalb 1 500 °C und wenigstens 10 MPa in einer Stickstoffatmosphäre durchführt.